# EUROPÄISCHE PATENTANMELDUNG

(11) **EP 0 691 451 A1**
(43) Veröffentlichungstag der Anmeldung: **10.01.1996**
(21) Anmeldenummer: 95890087.0
(22) Anmeldetag: 19.04.1995
(51) Int. Cl.: E06B 3/667, E06B 3/968

(54) **Verbindung für Hohlprofilleisten, Verfahren zum Herstellen derselben und hierfür verwendbarer Geradverbinder**

(30) Priorität: 04.07.1994 AT 1320/94
(71) Anmelder: Lisec, Peter, A-3363 Amstetten-Hausmening (AT)
(72) Erfinder: Lisec, Peter, A-3363 Amstetten-Hausmening (AT)
(74) Vertreter: Beer, Manfred, Dipl.-Ing.

(57) **Zusammenfassung**

Zum Verbinden der Enden von Hohlprofilleisten (3) wird in die Enden der Hohlprofilleisten (3) ein Geradverbinder (10) eingesteckt. In einer Wand (9) der Hohlprofilleisten (3) ist im Bereich der beiden Enden (1, 2) jeweils eine Öffnung (16) vorgesehen. Im Geradverbinder (10) sind mit den Öffnungen (16) fluchtend Löcher (13) vorgesehen, die in einer flachen Vertiefung (15) auf der der die Öffnungen (16) aufweisenden Wand (9) gegenüberliegenden Seite münden, vorgesehen. Durch die Öffnungen (16) in der Hohlprofilleiste (3) wird in das Innere der Enden (1, 2) der Hohlprofilleisten (3) Kunststoff (20) eingespritzt, der alle nicht vom Geradverbinder (10) eingenommenen Bereiche des Innenraumes der Hohlprofilleisten (3) ausfüllt. Durch die Löcher (13) im Geradverbinder (10) kann Kunststoff auch auf die der Wand (9) mit den Öffnungen (16) gegenüberliegende Seite des Geradverbinders (10) strömen und auch dort vorhandene Räume ausfüllen.

Durch den erhärtenden Kunststoff (20) wird eine sichere und dichte Verbindung stumpf aneinanderstoßender Hohlprofilleisten (3) erreicht, die auch was die Festigkeit der Verbindung anlangt, mit einer Stumpfverschweißung vergleichbar ist.

## Beschreibung

Die Erfindung betrifft eine Verbindung für stumpf aneinanderstoßende Hohlprofilleisten, mit einem im Inneren der Hohlprofilleisten angeordneten Geradverbinder, der an Bereichen der Innenflächen der Hohlprofilleisten anliegt, und mit im Inneren der Enden der stumpf aneinanderstoßenden Hohlprofilleisten vorgesehenem Kunststoff.

Bekannt sind Verbindungen für Hohlprofilleisten, bei welchen in die offenen Enden der miteinander zu verbindenden Hohlprofilleisten sogenannte Geradverbinder eingesteckt werden. Die bekannten Geradverbinder sind tiefgezogene oder gegossene Metallteile, die widerhakenartige Ansätze aufweisen, welche durch Reibschluß das Auseinanderziehen der beiden Enden der Hohlprofilleisten verhindern sollen.

Bekannt sind auch Verbindungen von Hohlprofilleisten, die mit Hilfe von Geradverbindern erstellt werden, wobei die Geradverbinder teilweise mit Kunststoff beschichtet sind. Bei diesen bekannten Verbindungen werden Geradverbinder eingesetzt, die ringförmig mit einem plastischen Kunststoff umspritzt worden sind. Ein für eine Abdichtung und/oder sichere und feste Verbindung förderliches vollständiges Ausfüllen des Inneren der Hohlprofilleiste wird dabei aber nicht erreicht.

Problematisch bei beiden bekannten Verbindungen ist es, daß die Hohlprofilleisten im Bereich der Stoßstelle nicht so gasdicht verbunden sind, wie dies bei stumpf verschweißten Hohlprofilleisten der Fall ist. Dieser Nachteil ist insbesondere bei Hohlprofilleisten, die als Abstandhalterrahmen für Isolierglasscheiben Verwendung finden, von Bedeutung, da dort eine potentielle Undichtigkeitsstelle vorliegt.

Der Erfindung liegt die Aufgabe zugrunde, eine einfach herzustellende, hinreichend stabile und dennoch dichte Verbindung von Hohlprofilleisten zu Verfügung zu stellen.

Gemäß der Erfindung wird diese Aufgabe dadurch gelöst, daß der Kunststoff wenigstens im Bereich des Geradverbinders den Hohlraum innerhalb der Hohlprofilleisten vollständig ausfüllt und den Geradverbinder an allen freien Flächen bedeckt.

Bei der erfindungsgemäßen Verbindung wird der Geradverbinder in den Enden der miteinander zu verbindenden Hohlprofilleisten durch den eingebrachten Kunststoff festgelegt und gleichzeitig durch diesen Kunststoff eine Abdichtung im Stoßbereich der Hohlprofilleisten erreicht.

Die miteinander zu verbindenden Enden von Hohlprofilleisten können Enden voneinander unabhängiger Stücke von Hohlprofilleisten sein. Es kann sich aber auch um die Enden ein und derselben, zu einem Abstandhalterrahmen gebogenen Hohlprofilleiste handeln.

In einer Ausführungsform der Erfindung ist vorgesehen, daß der Geradverbinder als flache Leiste ausgebildet ist. Diese Ausführungsform des erfindungsgemäßen Geradverbinders läßt sich besonders vorteilhaft im Stanzverfahren herstellen.

Eine erhöhte Zugfestigkeit der erfindungsgemäßen Verbindung ergibt sich gemäß einem Vorschlag bei dem vorgesehen ist, daß der Geradverbinder auf wenigstens einer Seite eine flache Vertiefung aufweist.

Die Verteilung des Kunststoffs im Inneren der miteinander zu verbindenden Hohlprofilleisten und die Zugfestigkeit der erfindungsgemäßen Verbindung kann gemäß einem Vorschlag der Erfindung verbessert werden, wenn der Geradverbinder wenigstens ein Loch aufweist. Bevorzugt ist dabei, daß das Loch im Bereich der flachen Vertiefung des Geradverbinders angeordnet ist.

Das Einbringen des Kunststoffs in die Enden der stumpf aneinanderstoßenden Hohlprofilleisten ist auf einfache Weise möglich, wenn vorgesehen ist, daß im Abstand von den stumpf aneinanderstoßenden Enden der Hohlprofilleisten und im Bereich des Geradverbinders in einer Wand der Hohlprofilleisten in wenigstens einer Hohlprofilleiste wenigstens eine Öffnung für das Einbringen von Kunststoff in fließfähigem Zustand vorgesehen ist. Bei dieser Ausführungsform der erfindungsgemäßen Verbindung kann erfindungsgemäß vorgesehen sein, daß die Öffnung im Bereich der Vertiefung im Geradverbinder vorgesehen sind, und/oder, daß die Öffnung im Bereich des Loches im Geradverbinder vorgesehen ist. Die beiden zuletzt genannten Ausführungsformen stellen sicher, daß der Kunststoff sicher und ohne lange Strömungswege in die für die Erhöhung der Festigkeit maßgeblichen Bereichen, wie sie im Bereich der Vertiefung bzw. im Bereich der Öffnung im Geradverbinder gebracht werden kann. Dabei ist es besonders bevorzugt, daß in jedem Ende der Hohlprofilleisten eine Öffnung und im Geradverbinder zwei mit den Öffnungen fluchtende Löcher vorgesehen sind. Bei dieser Ausführungsform ergeben sich besonders kurze Strömungswege, so daß der Druck, mit dem der Kunststoff eingespritzt wird, klein gehalten werden kann.

Gemäß einer weiteren Ausführungsform der Erfindung kann vorgesehen sein, daß die flache Vertiefung im Geradverbinder bis zu dessen Längsseiten verlängert ist. Auch diese Ausführungsform bringt eine weitere Erhöhung der Zugfestigkeit der erfindungsgemäßen Verbindung mit sich. Bei dieser Ausführungsform kann auch vorgesehen sein, daß an den Längsseitenrändern des Geradverbinders auf wenigstens einer Seite eine Einziehung vorgesehen ist. Auch diese Ausführungsform stellt sicher, daß der Kunststoff im kritischen Stoßbereich zwischen den Enden der beiden Hohlprofilleisten in sich geschlossen ist. Wenn überdies gemäß einem weiteren Vorschlag der Erfindung vorgesehen ist, daß die seitliche Verlängerung der Vertiefung des Geradverbinders im Bereich einer Einziehung vorgesehen ist, wird das Strömen von Kunststoff bis in den Bereich der Einziehung erleichtert.

In einer Ausführungsform der Erfindung ist vorgesehen, daß der Geradverbinder ein gestanzter und/oder gefräster Formteil ist. So wird ein besonders einfach herstellbarer Geradverbinder zur Verfügung gestellt.

Wenn gemäß einer Ausführungsform der Erfindung vorgesehen ist, daß der Geradverbinder aus einem Blechzuschnitt gebogen ist, wobei die flache Vertiefung durch umgeschlagene Ränder des Blechzuschnittes begrenzt ist, dann entfällt beim Herstellen des Geradverbinders eine spanabhebende Bearbeitung desselben.

Die Erfindung betrifft weiters ein Verfahren zum Herstellen einer Verbindung gemäß der Erfindung.

Bei dem Herstellen einer erfindungsgemäßen Verbindung kann gemäß der Erfindung so vorgegangen werden, daß man den Geradverbinder in beide Enden der miteinander zu verbindenden Hohlprofilleisten einsteckt, daß man über die in den Enden der Hohlprofilleisten vorgesehenen Öffnungen in das Innere der Hohlprofilleisten erhärtenden Kunststoff in einer Menge einbringt, die wenigstens den Bereich des Innenraums der Hohlprofilleisten ausfüllt, in welchem der Geradverbinder angeordnet ist.

In einer Ausführungsform des erfindungsgemäßen Verfahrens ist vorgesehen, daß man als erhärtenden Kunststoff Heißschmelzkleber verwendet. Durch die vorgeschlagene Verwendung eines Heißschmelzklebers wird zusätzlich zur Formschlüssigkeit auch eine die Festigkeit der Verbindung erhöhende Klebekraft erreicht.

Eine symmetrische Ausbildung der Verbindung, die besonders stabil und belastungsfest ist, ergibt sich, wenn der Geradverbinder in die Hohlprofilleisten symmetrisch zur Stoßstelle eingesetzt wird.

In einer Variante des erfindungsgemäßen Verfahrens ist vorgesehen, daß der Geradverbinder in die Enden der Hohlprofilleisten mit zu den Öffnungen in der einen Wand der Hohlprofilleisten abgekehrter, flacher Vertiefung eingesetzt wird. Diese Variante ergibt für das Strömen von Kunststoff im Inneren der Hohlprofilleisten hinreichende Strömungsquerschnitte.

Bei dem erfindungsgemäßen Verfahren kann auch so gearbeitet werden, daß der Geradverbinder in die Enden der Hohlprofilleisten mit zu den Öffnungen in der Wand der Hohlprofilleisten fluchtenden Löchern eingesetzt wird. Diese Arbeitsweise stellt sicher, daß der durch die Öffnungen eingespritzte Kunststoff ohne große Umlenkungen auf beide Seiten des eingesetzten Geradverbinders gelangen kann.

Wird das erfindungsgemäße Verfahren zum Verbinden von Hohlprofilleisten für Abstandhalterrahmen für Isolierglasscheiben oder für Teile von solchen eingesetzt, dann ist es erfindungsgemäß bevorzugt, daß die Öffnungen in der wenigstens einen Wand der Hohlprofilleiste in der, bezogen auf den Abstandhalterrahmen außen liegenden Wand der Hohlprofilleiste, vorgesehen sind. Diese Ausführungsform des erfindungsgemäßen Verfahrens stellt sicher, daß die Öffnungen in den Hohlprofilleisten, durch welche der Kunststoff eingespritzt wird, vom Inneren der Isolierglasscheibe her nicht sichtbar sind, was ästhetisch schöner ist. Überdies sind die Öffnungen zusätzlich durch die in die Randfuge der Isolierglasscheibe später eingebrachte Versiegelungsmasse zusätzlich abgedeckt.

Die Erfindung erstreckt sich auch auf einen Geradverbinder für eine erfindungsgemäße Verbindung und/oder zur Verwendung beim Verfahren gemäß der Erfindung.

Dieser Geradverbinder ist erfindungsgemäß dadurch gekennzeichnet, daß im Geradverbinder, der eine längliche Form aufweist, wenigstens zwei Löcher vorgesehen sind, daß auf einer Flachseite des Geradverbinders eine flache Vertiefung vorgesehen ist und daß die Löcher im Bereich der flachen Vertiefung angeordnet sind. Durch die vorgeschlagene Ausführungsform des Geradverbinders ergeben sich die oben im Zusammenhang mit der erfindungsgemäßen Verbindung geschilderten Vorteile.

Eine besonders enfache Ausführungsform des Geradverbinder ist dadurch gekennzeichnet, daß der Geradverbinder eine im wesentlichen rechteckförmige Umrißform aufweist. Dieser geradverbinder läßt sich besonders einfach herstellen.

Wenn der Geradverbinder gemäß einer Ausführungsform dadurch gekennzeichnet ist, daß der Geradverbinder im Bereich seiner Längsseitenränder Einschnürungen aufweist, ergibt sich eine erhöhte Festigkeit, da auch eine formschlüssige Verbindung erzielt wird. Bevorzugt ist dabei, daß die Einschnürungen in der Längsmitte des Geradverbinders vorgesehen sind. Bei dieser Ausführungsform ist es besonders einfach möglich, die Einschnürungen im Bereich der Stoßstelle zwischen den Enden der miteinander zu verbindenden Hohlprofilleisten vorzusehen, was zu einer weiteren Verbesserung der Verbindung, die mit Hilfe des Geradverbinders hergestellt worden ist, führt. Wenn bei dieser Ausführungsform noch vorgesehen ist, daß die flache Vertiefung durch seitliche Verlängerungen bis zu den Einschnürungen reicht, dann kann der in das Innere der Hohlprofilleisten einzuspritzende Kunststoff besonders einfach zu den Einschnürungen strömen.

Weitere Einzelheiten und Vorteile der erfindungsgemäßen Verbindung und ihres Verfahrens zur Herstellung und des erfindungsgemäßen Geradverbinders ergeben sich aus der nachstehenden Beschreibung eines Ausführungsbeispieles der erfindungsgemäßen Verbindung, in welcher auf die angeschlossene Zeichnung Bezug genommen wird. Es zeigt:
Fig. 1 einen Schnitt durch eine Verbindung gemäß der Linie I-I von Fig. 2,
Fig. 2 die Verbindung aus Fig. 1 in Ansicht von unten der Fig. 1 aus gesehen und
Fig. 3 eine andere Ausführungsform eines Geradverbinders in Draufsicht.

Bevorzugtes Einsatzgebiet der Erfindung ist das Verbinden von Hohlprofilleisten aus dünnwandigem Metallwerkstoff, die im Rollformverfahren hergestellt sind. Bei solchen dünnwandigen Metallprofilleisten ist erfahrungsgemäß das Stumpfverschweißen der miteinander zu verbindenden Enden von Hohlprofilleisten (oder der Enden einer Hohlprofilleiste) wegen der geringen Wandstärke problematisch.

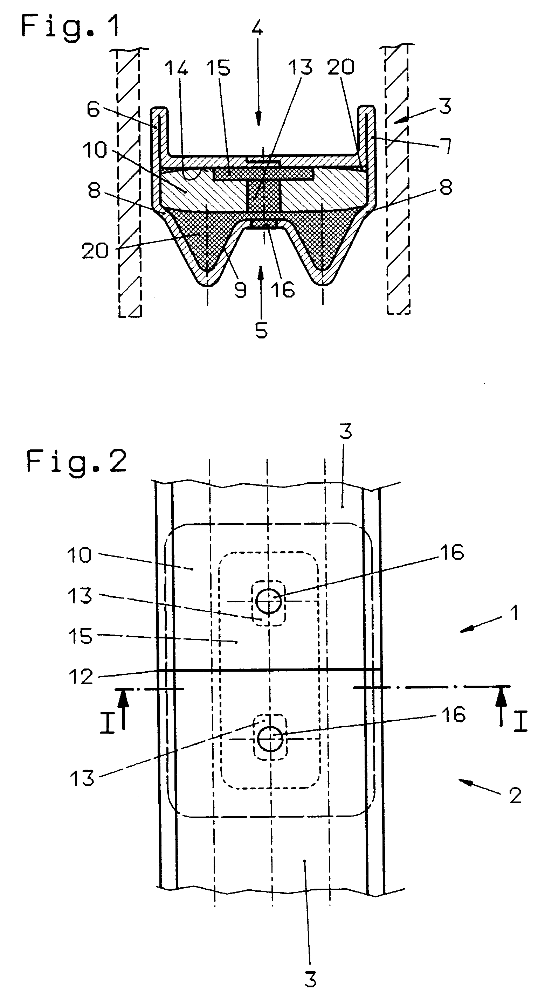

Bei dem in Fig. 1 und 2 gezeigten Ausführungsbeispiel werden die Enden 1 und 2 einer im Rollformverfahren hergestellten Hohlprofilleiste, die als Abstandhalter für Isolierglasscheiben bestimmt ist, miteinander verbunden.

Die in Fig. 1 im Querschnitt gezeigte Hohlprofilleiste 3 ist für Abstandhalterrahmen für Isolierglasscheiben bestimmt. Dabei wird die Hohlprofilleiste 3 so angeordnet, daß die in Fig. 1 oben liegende Wand 4 zum Inneren der Isolierglasscheibe hin weist, wogegen die Seite 5 im Abstandhalterrahmen nach außen weist und zusammen mit den Rändern der beiden Glastafeln der Isolierglasscheibe die mit Versiegelungsmasse zu füllende Randfuge definiert (die beiden Glastafeln sind in Fig. 1 angedeutet).

Die in Fig. 1 gezeigte Hohlprofilleiste 3 besitzt zwei Seitenwände 6 und 7, auf die eine Dicht- und Klebemasse (Butylkautschuk) aufgespritzt wird, um die Glastafeln der Isolierglasscheibe an der Hohlprofilleiste 3 (Abstandhalterrahmen) zu befestigen.

Im Übergangsbereich von den Seitenflächen 6 und 7 zur Seite 5 der Hohlprofilleiste 3 sind Kröpfungen 8 vorgesehen.

In den Innenraum der Hohlprofilleiste 3 ist ein Geradverbinder 10 eingesteckt, der wie aus Fig. 2 ersichtlich, symmetrisch zur Stoßstelle 12 zwischen den beiden Enden 1 und 2 der Hohlprofilleiste(n) 3 angeordnet ist.

Der Geradverbinder 10 ist als flache Leiste vorzugsweise aus Metall ausgebildet und hat in Draufsicht eine im wesentlichen rechteckförmige Umrißform.

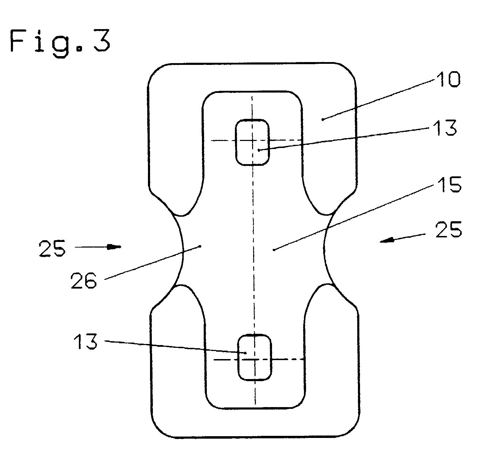

Im Geradverbinder 10 der Fig. 1 und 2 sind zwei beispielsweise als Langlöcher ausgebildete Löcher 13 vorgesehen. Weiters ist in der einen Fläche des Geradverbinders 10, und zwar in der der Wand 4 der Hohlprofilleiste 3 zugekehrten Fläche 14, eine flache Vertiefung 15 ausgespart. Die beiden Löcher 13 im Geradverbinder 10 sind im Bereich der flachen Vertiefung 15 angeordnet (Fig. 3).

Bei der in Fig. 3 gezeigten Ausführungsform des Geradverbinders 10 sind wieder zwei Löcher 13 vorgesehen und in einer der Großflächen des Geradverbinders 10 ist eine flache Vertiefung 15 ausgespart. Bei der in Fig. 3 gezeigten Ausführungsform des Geradverbinders 10 ist die flache Vertiefung 15 durch seitliche Verlängerungen 26 bis zu eingezogenen Bereichen 25 des Geradverbinders 10 verlängert. Dadurch wird im besonders kritischen Stoßbereich (in Fig. 3 symbolisiert durch die Pfeile 25) zwischen den Stirnflächen der miteinander zu verbindenden Enden 1, 2 der Hohlprofilleisten 3 auch an den Seitenflächen, d.h. im Bereich der Einziehungen 25 erhärtender Kunststoff 20 vorgesehen, so daß eine besonders feste Verbindung der beiden Enden 1, 2 der Hohlprofilleiste(n) 3 erreicht wird.

Im übrigen ist noch anzumerken, daß der Geradverbinder 10 nicht unbedingt aus einem Metallteil herausgefräst, -gestanzt oder -geprägt werden muß, sondern er kann auch ein entsprechend geformter Blechteil sein, wobei die flache Vertiefung 15 durch hochgerollte oder durch umgeschlagene Randbereiche des Rohlings des Geradverbinders 10 begrenzt wird.

In der Hohlprofilleiste 3 sind auf ihrer Seite 5, d.h. bei einem Abstandhalterrahmen in der Außenwand 9 der Hohlprofilleiste 3, Öffnungen 16 vorgesehen. Die Öffnungen 16 sind, wie Fig. 2 zeigt, beispielsweise kreisrund ausgebildet und fluchten im wesentlichen mit den Löchern 13 im Geradverbinder 10.

Im Bereich der Stoßstelle 12, d.h. wenigstens im Bereich der beiden Enden 1 und 2 der Hohlprofilleiste(n) 3, in welcher sich der Geradverbinder 10 befindet, ist der Innenraum der Hohlprofilleiste(n) 3 durch eine erhärtete Kunststoffmasse 20 (z.B. ein Heißschmelzkleber) ausgefüllt. Dadurch wird der Geradverbinder 10, auch ohne daß an ihm reibungserhöhende Vorsprünge (widerhakenartige Ausformungen oder Federn) vorgesehen sind, durch den Kunststoff 20 in den Enden 1 und 2 der Hohlprofilleiste(n) 3 festgelegt.

Es ist erkennbar, daß alle Flächen des Geradverbinders 10 entweder durch Kunststoff 20 bedeckt sind oder an der Innenseite der Hohlprofilleiste 3 anliegen, d.h. alle freien Flächen des Geradverbinders 10 (das sind die, an welchen der Geradverbinder 10 nicht an einem Wandteil der Hohlprofilleiste 3 anliegt), sind durch Kunststoff 20 bedeckt.

Zum Herstellen der in Fig. 1 und 2 gezeigten Verbindung kann beispielsweise wie folgt vorgegangen werden:

In eines der Enden, z.B. in das Ende 1 der Hohlprofilleiste 3, wird der Geradverbinder 10 so weit eingeschoben, daß sein Loch 13 mit der Öffnung 16 in der Wand 9 der Hohlprofilleiste 3 fluchtet. Hierauf wird das andere Ende 2 der Hohlprofilleiste 3 (oder einer anderen Hohlprofilleiste 3) auf das aus dem Ende 1 der Hohlprofilleiste 3 herausstehende Ende des Geradverbinders 10 geschoben, wobei ebenfalls die Öffnung 16 mit dem Loch 13 im Geradverbinder 10 fluchtet. Die beiden Enden 1 und 2 werden einander vorzugsweise so weit angenähert, daß ihre Stirnflächen im Bereich der Stoßstelle 12 dicht aneinander liegen.

Nun wird durch die Öffnungen 16 in der Wand 9 der Hohlprofilleiste 3 ein fließfähiger Kunststoff (z.B. erhitzter Heißschmelzkleber) eingespritzt, und zwar in einer Menge, die hinreicht, um alle Hohlräume in den Enden 1 und 2 der Hohlprofilleiste(n) 3 auszufüllen, die nicht vom Geradverbinder 10 eingenommen werden. Nachdem das Einspritzen des Kunststoffs beendet ist, kühlt dieser ab, härtet aus und die erfindungsgemäße Verbindung ist fertiggestellt. Durch die Löcher 13 und die flache Vertiefung 15 im Geradverbinder 10 gelangt Kunststoff 20 auch zur Seite 4 der Hohlprofilleiste 3, so daß auch dort die Verbindung sichernder und abdichtender Kunststoff 20 vorliegt. Bei dem Geradverbinder 10 der Fig. 3 gilt dies auch für die Seitenflächen, da durch die Einschnürungen 25 Kunststoff 20 an die Innenflächen der Seitenwände 6, 7 der Hohlprofilleiste 3 gelangt.

Es ist erkennbar, daß die Verbindung durch den eingebrachten Kunststoff 20 absolut gasdicht ist.

Zusammenfassend kann die Erfindung beispielsweise wie folgt dargestellt werden:

Zum Verbinden der Enden von Hohlprofilleisten 3 wird in die Enden der Hohlprofilleisten 3 ein Geradverbinder 10 eingesteckt. In einer Wand 9 der Hohlprofilleisten 3 ist im Bereich der beiden Enden 1, 2 jeweils eine Öffnung 16 vorgesehen. Im Geradverbinder 10 sind mit den Öffnungen 16 fluchtend Löcher 13 vorgesehen, die in einer flachen Vertiefung 15 auf der der die Öffnungen 16 aufweisenden Wand 9 gegenüberliegenden Seite münden, vorgesehen. Durch die Öffnungen 16 in der Hohlprofilleiste 3 wird in das Innere der Enden 1, 2 der Hohlprofilleisten 3 Kunststoff 20 eingespritzt, der alle nicht vom Geradverbinder 10 eingenommenen Bereiche des Innenraumes der Hohlprofilleisten 3 ausfüllt. Durch die Löcher 13 im Geradverbinder 10 kann Kunststoff auch auf die der Wand 9 mit den Öffnungen 16 gegenüberliegende Seite des Geradverbinders 10 strömen und auch dort vorhandene Räume ausfüllen.

Durch den erhärtenden Kunststoff 20 wird eine sichere und dichte Verbindung stumpf aneinanderstoßender Hohlprofilleisten 3 erreicht, die auch was die Festigkeit der Verbindung anlangt, mit einer Stumpfverschweißung vergleichbar ist.

## Patentansprüche

1. Verbindung für stumpf aneinanderstoßende Hohlprofilleisten (3), mit einem im Inneren der Hohlprofilleisten (3) angeordneten Geradverbinder (10), der an Bereichen der Innenflächen der Hohlprofilleisten (3) anliegt, und mit im Inneren der Enden (1, 2) der stumpf aneinanderstoßenden Hohlprofilleisten (3) vorgesehenem Kunststoff (20), dadurch gekennzeichnet, daß der Kunststoff (20) wenigstens im Bereich des Geradverbinders (10) den Hohlraum innerhalb der Hohlprofilleisten (3) vollständig ausfüllt und den Geradverbinder (10) an allen freien Flächen bedeckt.

2. Verbindung nach Anspruch 1, dadurch gekennzeichnet, daß der Geradverbinder (10) als flache Leiste ausgebildet ist.

3. Verbindung nach Anspruch 1 oder 2, dadurch gekennzeichnet, daß der Geradverbinder (10) auf wenigstens einer Seite eine flache Vertiefung (15) aufweist.

4. Verbindung nach einem der Ansprüche 1 bis 3, dadurch gekennzeichnet, daß der Geradverbinder (10) wenigstens ein Loch (13) aufweist.

5. Verbindung nach Anspruch 4, dadurch gekennzeichnet, daß das Loch (13) im Bereich der flachen Vertiefung (15) des Geradverbinders (10) angeordnet ist.

6. Verbindung nach einem der Ansprüche 1 bis 5, dadurch gekennzeichnet, daß im Abstand von den stumpf aneinanderstoßenden Enden (1, 2) der Hohlprofilleisten (3) und im Bereich des Geradverbinders (10) in einer Wand (9) der Hohlprofilleisten (3) in wenigstens einer Hohlprofilleiste (3) wenigstens eine Öffnung (16) für das Einbringen von Kunststoff (20) in fließfähigem Zustand vorgesehen ist.

7. Verbindung nach Anspruch 6, dadurch gekennzeichnet, daß die Öffnung (16) im Bereich der Vertiefung (15) im Geradverbinder (10) vorgesehen sind.

8. Verbindung nach Anspruch 7, dadurch gekennzeichnet, daß die Öffnung (16) im Bereich des Loches (13) im Geradverbinder (10) vorgesehen ist.

9. Verbindung nach Anspruch 8, dadurch gekennzeichnet, daß in jedem Ende (1, 2) der Hohlprofilleisten (3) eine Öffnung (16) und im Geradverbinder (10) zwei mit den Öffnungen (16) fluchtende Löcher (13) vorgesehen sind.

10. Verbindung nach einem der Ansprüche 1 bis 9, dadurch gekennzeichnet, daß die flache Vertiefung (15) im Geradverbinder (10) bis zu dessen Längsseiten verlängert (26) ist.

11. Verbindung nach Anspruch 10, dadurch gekennzeichnet, daß an den Längsseitenrändern des Geradverbinders (10) auf wenigstens einer Seite eine Einziehung (25) vorgesehen ist.

12. Verbindung nach Anspruch 11, dadurch gekennzeichnet, daß die seitliche Verlängerung (26) der Vertiefung (15) des Geradverbinders (10) im Bereich einer Einziehung (25) vorgesehen ist.

13. Verbindung nach einem der Ansprüche 1 bis 12, dadurch gekennzeichnet, daß der Geradverbinder (10) ein gestanzter und/oder gefräster Formteil ist.

14. Verbindung nach einem der Ansprüche 1 bis 13, dadurch gekennzeichnet, daß der Geradverbinder (10) aus einem Blechzuschnitt gebogen ist, wobei die flache Vertiefung (15) durch umgeschlagene Ränder des Blechzuschnittes begrenzt ist.

15. Verfahren zum Herstellen einer Verbindung nach einem der Ansprüche 1 bis 14, dadurch gekennzeichnet, daß man den Geradverbinder (10) in beide Enden (1, 2) der miteinander zu verbindenden Hohlprofilleisten (3) einsteckt, daß man über die in den Enden (1, 2) der Hohlprofilleisten (3) vorgesehenen Öffnungen (16) in das Innere der Hohlprofilleisten (3) erhärtenden Kunststoff (20) in einer Menge einbringt, die wenigstens den Bereich des Innenraums der Hohlprofilleisten (3) ausfüllt, in welchem der Geradverbinder (10) angeordnet ist.

16. Verfahren nach Anspruch 15, dadurch gekennzeichnet, daß man als erhärtenden Kunststoff (20) Heißschmelzkleber verwendet.

17. Verfahren nach Anspruch 15 oder 16, dadurch gekennzeichnet, daß der Geradverbinder (10) in die Hohlprofilleisten (3) symmetrisch zur Stoßstelle (12) eingesetzt wird.

18. Verfahren nach einem der Ansprüche 15 bis 18 dadurch gekennzeichnet, daß der Geradverbinder (10) in die Enden (1, 2) der Hohlprofilleisten (3) mit zu den Öffnungen (16) in der einen Wand (9) der Hohlprofilleisten (3) abgekehrter, flacher Vertiefung (15) eingesetzt wird.

19. Verfahren nach einem der Ansprüche 15 bis 18, dadurch gekennzeichnet, daß der Geradverbinder (10) in die Enden (1, 2) der Hohlprofilleisten (3) mit zu den Öffnungen (16) in der Wand (9) der Hohlprofilleisten (3) fluchtenden Löchern (13) eingesetzt wird.

20. Verfahren nach einem der Ansprüche 15 bis 19, wobei die Hohlprofilleisten (3) Abstandhalterrahmen für Isolierglasscheiben oder Teile eines solchen sind, dadurch gekennzeichnet, daß die Öffnungen (16) in der wenigstens einen Wand (9) der Hohlprofilleiste (3) in der, bezogen auf den Abstandhalterrahmen außen liegenden Wand (9) der Hohlprofilleiste (3), vorgesehen sind.

21. Geradverbinder für eine Verbindung nach einem der Ansprüche 1 bis 14 und/oder zur Verwendung beim Verfahren nach einem der Ansprüche 15 bis 21, dadurch gekennzeichnet, daß im Geradverbinder, der eine längliche Form aufweist, wenigstens zwei Löcher (13) vorgesehen sind, daß auf einer Flachseite des Geradverbinders (10) eine flache Vertiefung (15) vorgesehen ist und daß die Löcher (13) im Bereich der flachen Vertiefung (15) angeordnet sind.

22. Geradverbinder nach Anspruch 21, dadurch gekennzeichnet, daß der Geradverbinder (10) eine im wesentlichen rechteckförmige Umrißform aufweist.

23. Geradverbinder nach Anspruch 21 oder 22, dadurch gekennzeichnet, daß der Geradverbinder (10) im Bereich seiner Längsseitenränder Einschnürungen (25) aufweist.

24. Geradverbinder nach Anspruch 23, dadurch gekennzeichnet, daß die Einschnürungen (25) in der Längsmitte des Geradverbinders (10) vorgesehen sind.

25. Geradverbinder nach Anspruch 24, dadurch gekennzeichnet, daß die flache Vertiefung (15) durch seitliche Verlängerungen (26) bis zu den Einschnürungen (25) reicht.
